# EUROPEAN PATENT APPLICATION

(11) **EP 4 807 444 A1**
(43) Date of publication of application: **16.09.2026**
(21) Application number: 24888979.2
(22) Date of filing: 23.10.2024
(51) Int. Cl.: G03B 17/55, G03B 17/12, G03B 30/00, H05B 3/18, H05B 3/03

(54) **CAMERA MODULE**

(30) Priority: 10.11.2023 KR 20230155860
(71) Applicant: LG Innotek Co., Ltd., Seoul 07796 (KR)
(72) Inventor: KIM, Do Hyeon, Seoul 07796 (KR)
(74) Representative: Plasseraud IP
(86) International application number: PCT/KR2024/016111
(87) International publication number: WO 2025/100788

(57) **Abstract**

This heat-generating member comprises: an upper-end portion connected to a lens; a lower-end portion connected to a substrate module; and a connection portion connecting the upper-end portion and the lower-end portion, wherein the upper-end portion comprises a first area that is connected to the lower surface of the lens and a second area that is connected to a side surface of the lens.

## Description

### [Technical Field]

The present embodiment relates to a camera module.

### [Background Art]

Recently, ultra-small camera modules have been developed and are widely used in small electronic products such as smartphones, laptops, and game consoles.

As automobiles become more popular, ultra-small cameras are widely used in vehicles as well as in small electronic products. For example, black box cameras for vehicle protection or objective data on traffic accidents, rear surveillance cameras that allow drivers to monitor the blind spots at the rear of the vehicle through a screen to ensure safety when reversing, and surrounding detection cameras that can monitor the surroundings of the vehicle are provided.

A camera may be equipped with a lens, a lens holder that accommodates the lens, an image sensor that converts an image of a subject collected in the lens into an electrical signal, and a printed circuit board on which the image sensor is mounted. A housing forming the outer appearance of the camera is formed with a structure in which the entire area is sealed to prevent internal components from being contaminated by foreign substances containing moisture.

In a case of a camera module, since it is disposed outside a vehicle and is greatly affected by outdoor air, frost, dew condensation, and freezing frequently occur on a lens in winter. When frost, dew condensation, and freezing occur on the lens, there is a problem that performance of the camera module is significantly deteriorated

### [Detailed Description of the Invention]

### [Technical Subject]

The present embodiment is to provide a heating member and a camera module that can rapidly remove frost or freezing occurring on a surface of a lens through a heating function and can improve heating efficiency.

### [Technical Solution]

The heating member according to the present embodiment includes an upper end portion coupled to a lens, a lower end portion coupled to a substrate module, and a connection portion connecting the upper end portion and the lower end portion. The upper end portion includes a first region coupled to a lower surface of the lens and a second region coupled to a side surface of the lens.

The first region has a ring-shaped cross-section, and a plurality of the second regions are provided and may be disposed to face each other with respect to the first region.

A length of the second region may be 1/2 or less of a circumferential direction length of the first region.

The upper end portion includes a first base material, a second base material disposed on the first base material, and a heating layer disposed between the first base material and the second base material. The heating layer includes conductive particles, a polymer surrounding the conductive particles, and a plurality of electrodes disposed in the conductive particles. The plurality of electrodes may include a first electrode and a second electrode disposed at a radially outer side of the first electrode and having a polarity different from that of the first electrode.

The first electrode is disposed in the first region, and the second electrode is disposed in the first region and the second region. The second electrode may include a second-first electrode disposed in the first region and a second-second electrode disposed in the second region.

The second-second electrode may be disposed along an edge of the second region.

The second-second electrode may be disposed in a region connecting the first region and the second region, and may have a separation part which is a region where both ends are spaced apart from each other.

The second-second electrode may have a plurality of regions perpendicular to each other in the second region.

The second-second electrode may have a zigzag shape in the second region so as to have a region bent at least once or more.

A camera module according to the present embodiment comprises: a first body; a lens module disposed in the first body and including a barrel and a lens disposed in the barrel; a substrate module disposed in the first body; and a heating member having one end connected to a surface of the lens and the other end connected to the substrate module to provide heat to the lens, wherein the heating member includes an upper end portion coupled to the lens, a lower end portion coupled to the substrate module, and a connection portion connecting the upper end portion and the lower end portion, and wherein the upper end portion includes a first region coupled to a lower surface of the lens and a second region coupled to a side surface of the lens.

### [Advantageous Effects]

According to the present embodiment, by forming heating regions through a heating member on a plurality of surfaces with respect to a lens, there is an advantage in that various regions of the lens may be more uniformly heated.

### [Brief Description of Drawings]

FIG. 1 is a perspective view of a vehicle according to an embodiment of the present invention.
FIG. 2 is a cross-sectional view of a camera module according to an embodiment of the present invention.
FIG. 3 is a plan view illustrating one region of a heating member according to an embodiment of the present invention.
FIG. 4 is a view illustrating A-A' of FIG. 3.
FIG. 5 is a view illustrating a first modified embodiment of an arrangement structure of a second electrode in a second region according to an embodiment of the present invention.
FIG. 6 is a view illustrating a second modified embodiment of an arrangement structure of a second electrode in a second region according to an embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

The 'optical axis direction' used hereinafter is defined as the optical axis direction of the lens. Meanwhile, the 'optical axis direction' may correspond to 'up-down direction', 'z-axis direction', and the like.

Hereinafter, the present invention will be described in more detail with reference to the attached drawings.

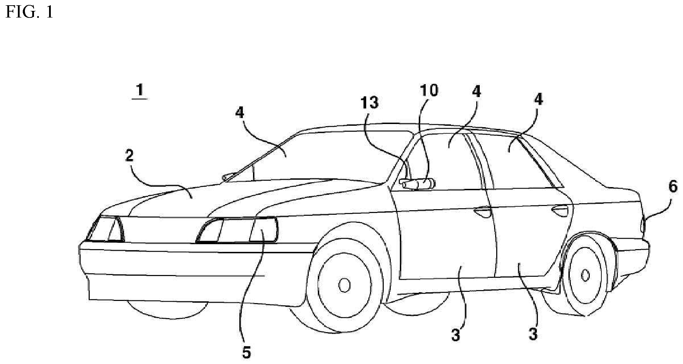

FIG. 1 is a perspective view of a vehicle according to an embodiment of the present invention.

Referring to FIG. 1, a vehicle **1** according to an embodiment of the present invention may comprise a body **2**, a door **3**, a glass **4**, a headlamp **5**, a tail lamp **6**, and a camera module **10**.

The body **2** may be an exterior member of the vehicle **1**. The body **2** may have various forms such as a frame type, a monocoque type, and the like. One or more doors **3** may be coupled to a side surface of the body **2**. In addition, the glass **4** may be coupled to a front and a rear (parts where pillars are formed) of an upper portion of the body **2** and to the door **3**. The headlamp **5** may be mounted on a front of a lower portion of the body **2**. The tail lamp **6** may be mounted on a rear of the lower portion of the body **2**.

A camera module **10** may be installed on a side portion of the body **2** or on a door disposed at a front among the one or more doors **3**. The camera module **10** may be installed on a front of the glass **4** coupled to the door **3**. That is, in the vehicle **1** of the present embodiment, a side mirror may be replaced with the camera module **10**.

The camera module **10** may photograph both rear sides of the vehicle. An image photographed by the camera module **10** may be electrically connected to a display unit (not shown) through an electronic control unit (ECU) or the like. Accordingly, the image photographed by the camera module **10** may be controlled by the electronic control unit (ECU) and reproduced on the display unit.

An indoor space for a driver may be formed in the body **2**. A display unit may be installed in the body **2**. The display unit may output the image photographed by the camera module **10**. The display unit may be installed on a dashboard (not shown) in the body **2**.

The installation form of the camera module **10** in the vehicle **1** described above is exemplary, and the camera module **10** may be used for at least one of a front camera, a side camera, a rear camera, and a black box of the vehicle **1**.

Hereinafter, a camera module according to the present embodiment will be described with reference to the drawings.

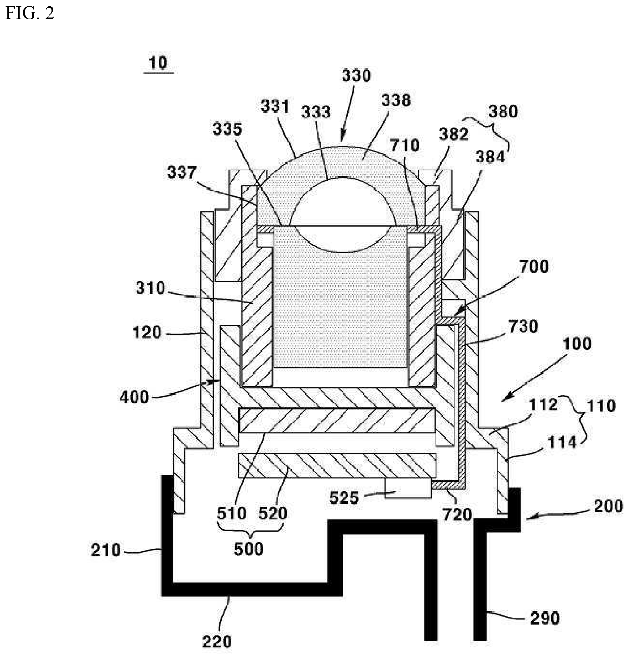

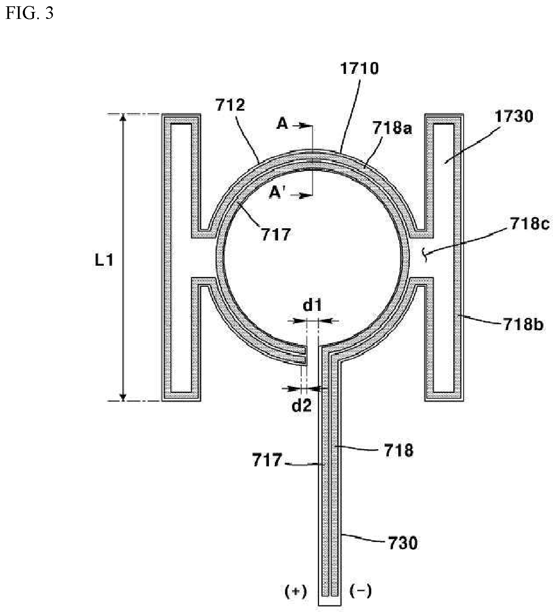

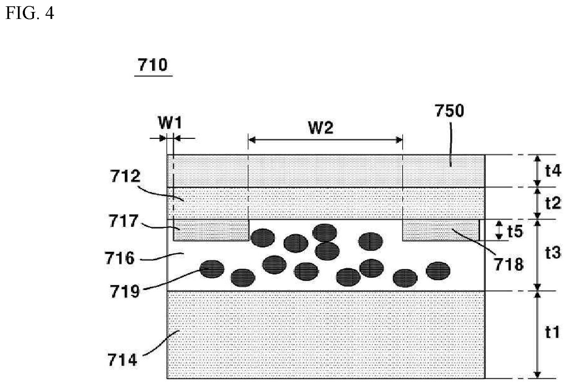

FIG. 2 is a cross-sectional view of a camera module according to an embodiment of the present invention, FIG. 3 is a plan view illustrating one region of a heating member according to an embodiment of the present invention, and FIG. 4 is a view illustrating A-A' of FIG. 3.

Referring to FIGS. 2 to 4, a camera module **10** according to an embodiment of the present invention may comprise: a first body **100**, a second body **200**, a lens module **300**, a lens holder **400**, a substrate module **500**, and a heating member **700**.

The first body **100** may form an outer appearance of the camera module **10**. The first body **100** may be named any one of a front body, an upper housing, and a first housing. A space may be formed in the first body **100** such that the lens module **300**, the lens holder **400**, and the substrate module **500** are disposed.

The first body **100** may include a body portion **110** and a protruding portion **120**. The body portion **110** and the protruding portion **120** may be integrally formed.

The body portion **110** may be formed of a metal material. The body portion **110** may be disposed on the second body **200**. The body portion **110** may be coupled to the second body **200**. A lower end of the body portion **110** may be fixed on the second body **200**. The body portion **110** may be coupled to the second body **200** by welding. Alternatively, the body portion **110** may be coupled to the second body **200** by an adhesive or fusion.

The body portion **110** may be formed in a rectangular shape with an opened lower portion. At this time, a corner of the body portion **110** may be formed to be rounded. The body portion **110** may include an upper plate **112** and a first side plate **114** extending downward from an edge of the upper plate **112**. The upper plate **112** may be formed in a rectangular shape. The upper plate **112** may extend outward from an outer circumferential surface of a lower end of the protruding portion **120**. The first side plate **114** may extend downward from an outer edge of the upper plate **112**. A plurality of the first side plates **114** may be provided. The first side plate **114** may include four side plates. The first side plate **114** may be formed in a rectangular plate shape. As an example, the first side plate **114** may include a first-first side plate, a first-second side plate, a first-third side plate disposed on an opposite side of the first-first side plate, and a first-fourth side plate disposed on an opposite side of the first-second side plate. The first side plate **114** may include first-first to first-fourth corners respectively disposed among the first-first to first-fourth side plates. Each of the first-first to first-fourth corners may include a round shape in at least a portion thereof.

A space portion partitioned from other regions may be formed in an inner side of the body portion **110**. The space portion may have an opened lower portion, and an upper portion thereof may be covered through the protruding portion **120** and a lower surface of the lens module **300**.

The first body **100** may include a protruding portion **120**. The protruding portion **120** may be formed of a metal material. The protruding portion **120** may have a circular cross-sectional shape. The protruding portion **120** may be disposed on the body portion **110**. The protruding portion **120** may extend upward from an upper surface of the body portion **110**. The protruding portion **120** may be integrally formed with the body portion **110**. As a modified embodiment, the protruding portion **120** may be coupled to the body portion **110**. In this case, the protruding portion **120** may be fixed to the body portion **110** by an adhesive. The protruding portion **120** may accommodate the lens module **300** in an inner side thereof. A space to which the lens module **300** is coupled may be formed in a central portion of the protruding portion **120**. The lens module **300** may be disposed in the space in the protruding portion **120**.

The camera module **10** may include a second body **200**. The second body **200** may be named any one among a rear body, a lower housing, a second housing, and a rear cover. The second body **200** may be formed in a rectangular shape with an opened upper portion. The second body **200** may be formed of a metal material. The second body **200** may be disposed below the first body **100**. The second body **200** may be coupled to the first body **100**. The second body **200** may form an internal space through coupling with the first body **100**. The second body **200** may include a space portion with an opened upper surface.

The second body **200** may include a lower plate **220**. The lower plate **220** may face an upper plate **114** of the first body **100** in an optical axis direction. The lower plate **220** may be spaced apart from the upper plate **114** of the first body **110** in the optical axis direction. The lower plate **220** may be parallel to the upper plate **114** of the first body **100**. The lower plate **220** may be formed in a rectangular shape. At this time, a corner of the lower plate **220** may include a round shape in at least a portion thereof.

The second body **200** may include a second side plate **210**. The second side plate **210** may extend from the lower plate **220**. The second side plate **210** may extend upward from an outer edge of the lower plate **220**. A shield member (not shown) may be disposed on the second side plate **210**. The shield member may be in surface contact with an inner surface of the second side plate **210**. An upper end of the second side plate **210** may be coupled to the first body **100**. The inner surface of the second side plate **210** may be disposed to surround an outer surface of the first side plate **114**. The inner surface of the second side plate **210** and the outer surface of the first side plate **114** may be coupled to each other by at least one method among welding, an adhesive, and fusion.

The second body **200** may include a connector leading-out portion **290**. The connector leading-out portion **290** may have a shape protruding downward from a lower surface of the lower plate **220**. A connector **490**, which will be described later, may be disposed in the connector leading-out portion **290**. The connector leading-out portion **290** may be formed of a metal material. The connector leading-out portion **290** may have a hollow pipe shape therein.

The camera module **10** may include a lens module **300**. The lens module **300** may be coupled to the first body **100**. The lens module **300** may be coupled to a hole of the protruding portion **120**. At least a portion of the lens module **300** may be disposed in an inner side of the protruding portion **120**, and a remaining portion thereof may be disposed to protrude upward from the first body **100**.

The lens module **300** may include a barrel **310** and one or more lenses **330** accommodated in the barrel **310**. The lens **330** may be disposed to face an image sensor in a substrate module **500**, which will be described later, in an optical axis direction. The lens **330** may be aligned with the image sensor in the optical axis. A plurality of the lenses **330** may be provided and may be disposed to be spaced apart from each other along the optical axis direction in the barrel **310**. An outermost lens among the plurality of lenses **330** may be exposed upward from the camera module **10**.

The barrel **310** may include a space with opened upper and lower surfaces in an inner side thereof. The lens **330** may be disposed in the space of the barrel **310**. The barrel **310** may have a circular cross-sectional shape. The barrel **310** may be formed of a metal material. The barrel **310** may include a hole through which a connection portion **730** of the heating member **700**, which will be described later, passes. The hole may be formed in a direction perpendicular to the optical axis direction of the lens **330**.

The lens module **300** may include a retainer **380**. The retainer **380** may be coupled to an outer surface of the barrel **310**. The retainer **380** may be screw-coupled to the barrel **310**. Alternatively, the retainer **380** and the barrel **310** may be coupled to each other through epoxy. The retainer **380** may be coupled to an upper end of the barrel **310**. At least a portion of the retainer **380** may be disposed in the first body **100**. An incident surface of an outermost lens among the lenses **330** may protrude upwardly beyond an upper surface of the retainer **380**.

The coupling structure of the barrel **310** and the retainer **380** described above is exemplary, and the camera module **10** may be implemented in an integral structure in which the barrel **310** and the retainer **380** are one body.

The retainer **380** may have a ring-shaped cross-section. At least a portion of the retainer **380** may be disposed to cover an edge of the outermost lens. The retainer **380** may be disposed to surround the edge of the outermost lens. The retainer **380** may be disposed to cover an edge of the incident surface of the outermost lens. The retainer **380** may be in contact with a portion of the incident surface of the outermost lens.

The retainer **380** may include a first region **382** having a lower surface supporting the incident surface of the outermost lens, and a second region **384** extending downward from an edge of the first region **382**. The second region **384** may be disposed between the barrel **310** and the first body **100**. The first region **382** and the second region **384** may be disposed perpendicular to each other.

The camera module **10** may include a lens holder **400**. The lens holder **400** may be disposed between the first body **100** and the barrel **310**. The lens holder **400** may be disposed to surround an outer surface of the barrel **310**. The lens holder **400** may be formed in a cylindrical shape having a hollow penetrating from an upper surface to a lower surface thereof. A screw thread or a screw groove may be formed on an inner surface of the lens holder **400**. A screw groove or a screw thread may be formed on an outer surface of the barrel **310** facing the inner surface of the lens holder **400**. The barrel **310** may be screw-coupled in the lens holder **400**.

A substrate coupling portion to which a first substrate **510** of a substrate module **500**, which will be described later, is coupled may be formed on the lower surface of the lens holder **400**. The substrate coupling portion may have a groove shape concave upwardly beyond other regions.

The lens holder **400** may be omitted. In this case, the substrate module **500** may be coupled in a space in the first body **100**.

The camera module **10** may include a substrate module **500**. The substrate module **500** may be disposed in a space in the camera module **10**. The substrate module **500** may be disposed between the first body **100** and the second body **200**.

The substrate module **500** may comprise: a first substrate **510**, a second substrate **520**, and a connection substrate (not shown).

The first substrate **510** may be a printed circuit board (PCB). An image sensor may be disposed on an upper surface of the first substrate **510**. The image sensor may be disposed on the first substrate **510** to face the lens **330** in the lens module **300** in an optical axis direction. The first substrate **510** may be disposed in the substrate coupling portion of the lens holder **400**.

The second substrate **520** may be a printed circuit board (PCB). The second substrate **520** may be disposed to be spaced apart from the first substrate **510** in the optical axis direction. The second substrate **520** may be disposed below the first substrate **510**. A connector (not shown) may be coupled to a lower surface of the second substrate **520**. An upper end of the connector may be soldered to the lower surface of the second substrate **520**.

A terminal **525** may be disposed on the lower surface of the second substrate **520**. The terminal **525** may be electrically and physically connected to a lower end of the heating member **700**, which will be described later.

The second substrate **520** may be electrically connected to the first substrate **510**. The second substrate **520** and the first substrate **510** may be electrically connected through the connection substrate. The connection substrate may be a flexible printed circuit board (FPCB). Upper and lower ends of the connection substrate may be coupled to the first substrate **510** and the second substrate **520**, respectively, to electrically connect the first substrate **510** and the second substrate **520**.

The substrate module **500** may further include a shield can (not shown) disposed between the first substrate **510** and the second substrate **520**. The first substrate **510** and the second substrate **520** may be spaced apart from each other in the optical axis direction through the shield can.

Hereinafter, a heating structure of a lens according to an embodiment of the present invention will be described.

The camera module **10** may include a heating member **700**. The heating member **700** may provide heat to a surface of the lens **330**. The heating member **700** may provide heat to a surface of an outermost lens among a plurality of the lenses **330**. Accordingly, frost formed on the surface of the lens **330** may be removed.

The heating member **700** may be a PTC heater (positive temperature coefficient heater). One end of the heating member **700** may be connected to the surface of the lens **330**, and the other end thereof may be connected to the substrate module **500**.

In detail, the outermost lens **330** disposed on the barrel **310** may comprise: an incident surface **331** through which light is incident; an exit surface **333** facing the incident surface **331** and through which the incident light is emitted toward the image sensor; and a connection surface connecting the incident surface **331** and the exit surface **333**. The connection surface may include a first connection surface **335** forming a lower surface of the lens **330** and a second connection surface **337** forming a side surface of the lens **330**. One end of the heating member **700** may be coupled to the first connection surface **335** and the second connection surface **337**. The first connection surface **335** and the second connection surface **337** may be perpendicular to each other.

The first connection surface **335** may include a plurality of surfaces disposed to be stepped with respect to each other in an optical axis direction. The plurality of surfaces may include a first surface and a second surface disposed in an inner side of the first surface. The plurality of surfaces may include a first side surface connecting the first surface and the second surface. The first surface may be disposed above the second surface. One end of the heating member **700** may be coupled to the first surface. One end of the heating member **700** may be coupled to the first side surface.

The heating member **700** may have a film shape. The heating member **700** may be a substrate on which a circuit pattern is formed. The heating member **700** may be a flexible printed circuit board (FPCB).

The heating member **700** may include an upper end portion **710**, a lower end portion **720**, and a connection portion **730**. The upper end portion **710** is disposed at an upper end of the heating member **700** and may be coupled to a surface of the lens **330**.

As illustrated in FIG. 3, the upper end portion **710** may include a first region **1710** having a ring-shaped cross-section and coupled to the first connection surface **335**, and a second region **1730** disposed at an outer side of the first region **1710** and coupled to the second connection surface **337**. The first region **1710** and the second region **1730** may be disposed perpendicular to each other. A plurality of the second regions **1730** may be provided and may be disposed to face each other with respect to the first region **1710**. The second region **1730** may have a shape protruding outward from an outer circumferential surface of the first region **1710** having a circular cross-sectional shape. Each among the plurality of second regions **1730** may have a bar shape. The outer circumferential surface of the first region **1710** may be connected to a longitudinal center of the second region **1730**.

A length **L1** of each among the plurality of second regions **1730** may be 1/2 or less of a circumferential length of the outermost lens. The length **L1** of each among the plurality of second regions **1730** may be 1/2 or less of a circumferential length of the second connection surface **337**. Accordingly, when the second regions **1730** are coupled to the second connection surface 337, end portions of the plurality of second regions **1730** may have regions spaced apart from each other along a circumferential direction. A gap may be formed between both ends of the plurality of second regions **1730**.

Alternatively, the length **L1** of each among the plurality of second regions **1730** may be 1/2 or more of the circumferential length of the outermost lens. The length **L1** of each among the plurality of second regions **1730** may be 1/2 or more of the circumferential length of the second connection surface **337**. Accordingly, the plurality of second regions **1730** may have overlapping regions with each other on the second connection surface **337**.

The lower end portion **720** is disposed at a lower end of the heating member **700** and may be coupled to the substrate module **500**. The lower end portion **720** may be coupled to a lower surface of the second substrate **520** of the substrate module **500**. The lower end portion **720** may be coupled to the terminal **525** disposed on the lower surface of the second substrate **520**. Accordingly, power may be provided from the substrate module **500** to the heating member **700**, or a driving signal may be transmitted and received.

The connection portion **730** may connect the upper end portion **710** and the lower end portion **720**. The connection portion **730** may include a region bent at least once or more. At least a portion of the connection portion **730** may be disposed between an outer surface of the barrel **310** and an inner surface of the first body **100**. A hole may be formed in the barrel **310** so that the connection portion **730** passes therethrough.

The upper end portion **710** may include a plurality of electrodes **717** and **718** spaced apart from each other in a radial direction. Similarly, the connection portion **730** may include a plurality of electrodes respectively connected to the plurality of electrodes. The plurality of electrodes **717** and **718** may include a first electrode **717** and a second electrode **718**. The second electrode **718** may be disposed outside the first electrode **717**. Polarities of the first electrode **717** and the second electrode **718** may be different from each other. For example, the first electrode **717** may have a positive (+) polarity, and the second electrode **718** may have a negative (-) polarity.

The first electrode **717** may be disposed in the first region **1710** of the upper end portion **710**. The second electrode **718** may be disposed in both the first region **1710** and the second region **1730** of the upper end portion **710**.

In detail, the first electrode **717** extending from the connection portion **730** may be disposed at the upper end portion **710** so as to form a circular cross-sectional shape having an inner space where both ends are spaced apart from each other along a circumferential direction.

The second electrode **718** extending from the connection portion **730** may be disposed at an outer side of the first electrode **717** to form a concentric circle with the first electrode **717** in the first region **1710**, and a portion thereof may extend to the second region **1730** and be disposed along a periphery of the second region **1730**. In this case, the second electrode **718** may be defined as including a second-first electrode **718a** disposed in the first region **1710** and a second-second electrode **718b** disposed in the second region **1730**. Meanwhile, in a region where the first region **1710** and the second region **1730** are connected, the second-second electrode **718b** may have a spaced portion **718c** in which both ends are spaced apart from each other in a circumferential direction of the lens **330**.

According to the structure as described above, by disposing any one electrode among a plurality of electrodes in the second region **1730** extending from the first region **1710**, an electrical short between the plurality of electrodes in the second region **1730** where a shape deformation occurs may be prevented.

Meanwhile, it goes without saying that both the first electrode **717** and the second electrode **718** may be disposed in the second region **1730**, and in this case, the first electrode **717** in the second region **1730** may be disposed at an inner side of the second electrode **718**.

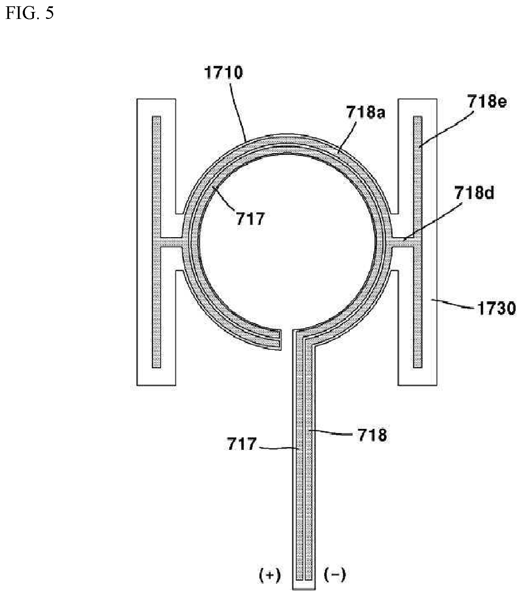

FIG. 5 is a view illustrating a first modified embodiment of an arrangement structure of a second electrode in a second region according to an embodiment of the present invention. Referring to FIG. 5, the second electrode **718** may include a plurality of regions perpendicular to each other in the second region **1730**. The second electrode **718** may include a first extension portion **718d** extending from the second electrode **718** in the first region **1710**, and a second extension portion **718e** disposed perpendicular to an end portion of the first extension portion **718d** and extending along a longitudinal direction of the second region **1730**. In this case, the end portion of the first extension portion **718d** may be connected to a longitudinal center of the second extension portion **718e**.

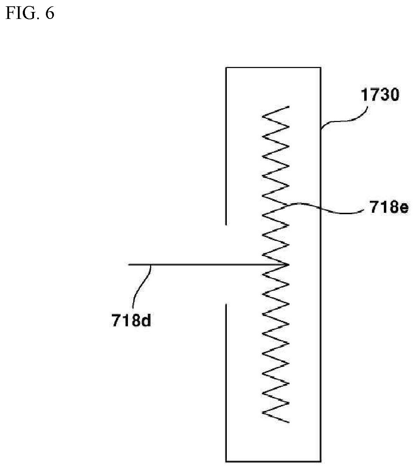

FIG. **6** is a view illustrating a second modified embodiment of an arrangement structure of a second electrode in a second region according to an embodiment of the present invention. Referring to FIG. 6, the second extension portion **718e** of the first modified embodiment described above may include a region bent at least once or more. The second extension portion **718e** may be formed in a zigzag shape. Accordingly, the second extension portion **718e** may be disposed at a higher density in the second region **1730**.

As illustrated in FIG. 3, one end of the upper end portion **710** is connected to the connection portion **730**, and the other end of the upper end portion **710** may be spaced apart from the connection portion **730** by a first separation distance **d1**. Accordingly, assembly reliability may be secured when the heating member **700** is attached to the lens **330**. The other end of the upper end portion **710** and an end of an electrode in the upper end portion **710** may be spaced apart by a second separation distance **d2**. Accordingly, the electrode in the upper end portion **710** may be prevented from being exposed to an outside, so that heat transfer reliability of the heating member **700** may be improved.

As illustrated in FIG. 4, the heating member **700** may comprise: a first base material **712**, a second base material **714**, a heating layer **716**, and an adhesive layer **750**.

The first base material **712** and the second base material **714** are respectively formed in a film shape, and may form a space in which the heating layer **716** is formed therebetween. The first base material **712** may be disposed relatively closer to the surface of the lens **330** than the second base material **714**. Accordingly, the first base material **712** and the second base material **714** may be named an upper base material and a lower base material, respectively.

The first base material **712** and the second base material **714** may be formed of different materials. As an example, a material of the first base material **712** may be polyimide. A material of the second base material **714** may be PET.

Based on the optical axis direction, a thickness **t2** of the first base material **712** may be smaller than a thickness **t1** of the second base material **714**. As an example, the thickness **t2** of the first base material **712** may be 1/4 or less of the thickness **t1** of the second base material **714.** The thickness **t2** of the first base material **712** may be 20 µm to 30 µm. The thickness **t1** of the second base material **714** may be 80 µm to 120 µm. According to the structure as described above, by forming the thickness of the first base material **712** disposed relatively closer to the surface of the lens **330** to be thin, heat generated from the heating layer **716** may be efficiently transferred to the surface of the lens **330.** In addition, heat loss through the second base material **714** may be prevented.

A thermal conductivity of the first base material **712** may be greater than a thermal conductivity of the second base material **714.** Accordingly, heat may be concentrated to the lens **330** through the first base material **712.**

The heating layer **716** may be disposed between the first base material **712** and the second base material **714.** The heating layer **716** may comprise: a polymer, conductive particles **719** disposed in the polymer, and electrodes **717** and **718.** The polymer may be disposed to surround the conductive particles **719.**

The electrodes **717** and **718** may be disposed on a surface of the polymer. The first electrode **717** and the second electrode **718** may be disposed on the surface of the polymer. The heating layer **716** may generate heat by a resistance change of the conductive particles **719** due to power provision from the substrate module **500.** One surface of the first base material **712** may directly contact the plurality of electrodes **718.**

As illustrated in FIG. 4, a radial gap **W1** from any one among the plurality of electrodes **718** to an inner surface or an outer surface of the heating layer **716** may be smaller than a gap **W2** between the plurality of electrodes 718. Accordingly, heat transfer may be more easily performed in a direction of the lens **330** than at a side surface of the heating member **700.**

In addition, a thickness **t5** of the electrode **718** in the optical axis direction may be greater than a diameter of the conductive particles 719. Accordingly, heat transfer to a region between the plurality of electrodes **718** may be more easily performed.

A thickness **t3** of the heating layer **716** may be greater than the thickness **t2** of the first base material **712,** and may be smaller than or equal to the thickness **t1** of the second base material **714.**

An adhesive layer **750** may be disposed on the first base material **712.** The adhesive layer **750** may be formed on the other surface facing one surface of the first base material **712** contacting the electrode **718.** An adhesive may be disposed on a surface of the adhesive layer **750.** The heating member **700** and the lens **330** may be coupled through the adhesive layer **750.** A thickness **t4** of the adhesive layer **750** may be thicker than the thickness **t2** of the first base material **712.** The thickness **t4** of the adhesive layer **750** may be thinner than the thickness **t1** of the second base material **714.** The thickness of the adhesive layer **750** may be 40 µm to 60 µm. A material of the adhesive layer **750** may be alumina or a carbon-based material without electrical conductivity.

A thermal conductivity of the adhesive layer **750** may be greater than the thermal conductivity of the second base material **714.** The thermal conductivity of the adhesive layer **750** may be greater than the thermal conductivity of the first base material **712.** Accordingly, heat may be concentrated to the lens **330** through the adhesive layer **750.**

Meanwhile, a release film (not shown) may be disposed on the adhesive layer **750,** and strength of the heating member **700** may be reinforced through the release film.

According to the structure as described above, according to a thermal resistance formula in which thermal resistance is inversely proportional to a movement path of heat, the heating member **700** according to the present embodiment can not only easily transfer heat toward the lens **330** through thickness control of the first base material **712** and the second base material **714**, but also has an advantage of improving heating efficiency of the lens **330** by preventing heat loss to other regions.

In addition, by forming heating regions through the heating member on a plurality of surfaces with respect to the lens, there is an advantage in that various regions of the lens can be more uniformly heated.

In the above description, it is described that all the components constituting the embodiments of the present invention are combined or operated in one, but the present invention is not necessarily limited to these embodiments. In other words, inside the scope of the present invention, all of the components may be selectively operated in combination with one or more. In addition, the terms "comprise", "include" or "having" described above mean that the corresponding component may be inherent unless specifically stated otherwise, and thus it should be construed that it does not exclude other components, but further include other components instead. All terms, including technical and scientific terms, have the same meaning as commonly understood by one of ordinary skill in the art unless otherwise defined. Terms used generally, such as terms defined in a dictionary, should be interpreted to coincide with the contextual meaning of the related art, and shall not be interpreted in an ideal or excessively formal sense unless explicitly defined in the present invention.

The above description is merely illustrative of the technical idea of the present invention, and those skilled in the art to which the present invention pertains may make various modifications and changes without departing from the essential characteristics of the present invention. Therefore, the embodiments disclosed in the present invention are not intended to limit the technical idea of the present invention but to describe the present invention, and the scope of the technical idea of the present invention is not limited by these embodiments. The protection scope of the present invention should be interpreted by the following claims, and all technical ideas inside the equivalent scope should be interpreted as being included in the scope of the present invention.

## Claims

1. A heating member comprising:
an upper end portion coupled to a lens;
a lower end portion coupled to a substrate module; and
a connection portion connecting the upper end portion and the lower end portion,
wherein the upper end portion comprises a first region coupled to a lower surface of the lens and a second region coupled to a side surface of the lens.

2. The heating member according to claim 1,
wherein the first region has a ring-shaped cross-section, and
wherein a plurality of second regions are provided and disposed opposite to each other with respect to the first region.

3. The heating member according to claim 2,
wherein a length of each of the second regions is 1/2 or less of a circumferential length of the first region.

4. The heating member according to claim 1,
wherein the upper end portion comprises a first base material, a second base material disposed on the first base material, and a heating layer disposed between the first base material and the second base material,
wherein the heating layer comprises conductive particles, a polymer surrounding the conductive particles, and a plurality of electrodes disposed on the polyme, and
wherein the plurality of electrodes comprise a first electrode and a second electrode disposed at a radially outer side of the first electrode and having a polarity different from that of the first electrode.

5. The heating member according to claim 4,
wherein the first electrode is disposed in the first region,
wherein the second electrode is disposed in the first region and the second region, and
wherein the second electrode comprises a second-first electrode disposed in the first region and a second-second electrode disposed in the second region.

6. The heating member according to claim 5,
wherein the second-second electrode is disposed along an edge of the second region.

7. The heating member according to claim 6,
wherein the second-second electrode is disposed in a region connecting the first region and the second region, and
wherein the second-second electrode has a spaced portion in which both ends are spaced apart from each other.

8. The heating member according to claim 5,
wherein the second-second electrode has a plurality of regions perpendicular to each other within the second region.

9. The heating member according to claim 7,
wherein the second-second electrode has a zigzag shape within the second region, and
wherein the second-second electrode **includes at least one bent region**.

10. A camera module comprising:
a first body;
a lens module disposed within the first body and comprising a barrel and a lens disposed within the barrel;
a substrate module disposed within the first body; and
a heating member having one end connected to a surface of the lens and the other end connected to the substrate module,
wherein the heating member comprises an upper end portion coupled to the lens, a lower end portion coupled to the substrate module, and a connection portion connecting the upper end portion and the lower end portion, and
wherein the upper end portion comprises a first region coupled to a lower surface of the lens and a second region coupled to a side surface of the lens.
